# EUROPEAN PATENT APPLICATION

(11) **EP 2 778 861 A1**
(43) Date of publication of application: **17.09.2014**
(21) Application number: 13159646.2
(22) Date of filing: 15.03.2013
(51) Int. Cl.: G06F 3/023, G06F 3/0488

(54) **System and method for predictive text input**

(71) Applicant: BlackBerry Limited, Waterloo, ON N2K 0A7 (CA)
(72) Inventor: Pasquero, Jerome, Montreal, Quebec H2Y 2P5 (CA); McKenzie, Donald Somerset McCulloch, Waterloo, Ontario N2L 3W8 (CA); Griffin, Jason Tyler, Waterloo, Ontario N2L 3W8 (CA)
(74) Representative: Moore, Barry

(57) **Abstract**

A method for an electronic device having a display, displaying a first virtual keyboard including a set of keys, wherein each key of the set of keys is associated with one or more characters, receiving an input reflecting selection of one or more keys of the set of keys, determining, based on the selection, one or more subsequent candidate input characters and one or more word predictions corresponding to the one or more subsequent candidate input characters, displaying, on the display, a second virtual keyboard including a second set of keys, wherein the second set of keys comprises one or more keys associated with the one or more word predictions positioned based, at least in part, on the one or more subsequent candidate input characters. An electronic device including a display, a memory, and a processor, the processor being configured to execute the method.

## Description

### FIELD

Example embodiments disclosed herein relate generally to input methodologies for electronic devices, such as handheld electronic devices, and more particularly, to systems and methods for receiving predictive text input and generating a set of characters for electronic devices.

### BACKGROUND

Increasingly, electronic devices, such as computers, laptops, netbooks, cellular phones, smart phones, personal digital assistants, tablets, etc., have touchscreens that allow a user to input characters into an application, such as a word processor or e-mail application. Character input on touchscreens can be a cumbersome task due to, for example, the small touchscreen area, particularly where a user needs to input a long message.

### BRIEF DESCRIPTION OF THE DRAWINGS

**Fig. 1** is an example block diagram illustrating an electronic device, consistent with embodiments disclosed herein.

**Fig. 2** is a flowchart illustrating an example method for generating and displaying a set of characters on a keyboard, consistent with embodiments disclosed herein.

**Figs. 3A****,** **3B**, and **3C** show an example front view of a keyboard of an electronic device, consistent with embodiments disclosed herein.

**Figs. 4A** and **4B** show an example front view of a keyboard of an electronic device, consistent with embodiments disclosed herein.

**Figs. 5A** and **5B** show an example front view of a keyboard of an electronic device, consistent with embodiments disclosed herein.

### DESCRIPTION OF EXAMPLE EMBODIMENTS

Reference will now be made in detail to various embodiments, examples of which are illustrated in the accompanying drawings. Wherever possible, the same reference numbers will be used throughout the drawings to refer to the same or like parts.

The present disclosure relates to an electronic device. The electronic device can be a mobile or handheld wireless communication device such as a cellular phone, smart phone, wireless organizer, personal digital assistant, wirelessly enabled notebook computer, tablet, or similar device. The electronic device can also be an electronic device without wireless communication capabilities, such as a desktop computer, handheld electronic game device, digital photograph album, digital camera, or other device.

Basic predictive text input solutions have been introduced for assisting with input on an electronic device. These solutions include predicting which word a user intends to enter and offering a suggestion for completing the word. But these solutions can have limitations, often requiring the user to input most or all of the characters in a word before the solution suggests the word the user intends to input. Moreover, a user often has to divert focus from the keyboard to view and consider the suggested word displayed elsewhere on the display of the electronic device and, thereafter, look back at the keyboard to continue typing. Refocusing of one's eyes relative to the keyboard while inputting information in an electronic device, particularly when composing lengthy texts, can strain the eyes and be cumbersome, distracting, and otherwise inefficient.

Accordingly, example embodiments described herein provide the user with word and character predictions that are displayed in an intuitive way, thereby permitting the user of an electronic device to input characters without diverting attention and visual focus from the keyboard.

Use of the indefinite article "a" or "an" in the specification and the claims is meant to include one or more than one of the feature that it introduces, unless otherwise indicated. Thus, for example, the term "a set of characters" as used in "generating a set of characters" can include the generation of one or more than one set of characters. Similarly, use of the definite article "the," particularly after a feature has been introduced with the indefinite article, is meant to include one or more than one of the feature to which it refers (unless otherwise indicated).

In one example embodiment, a method for an electronic device having a display is provided. The method comprises displaying, on the display, a first virtual keyboard including a set of keys, wherein each key of the set of keys is associated with one or more characters, receiving an input reflecting selection of one or more keys of the set of keys, determining, based on the selection, one or more subsequent candidate input characters and one or more word predictions corresponding to the one or more subsequent candidate input characters, displaying, on the display, a second virtual keyboard including a second set of keys, wherein the second set of keys comprises one or more keys associated with the one or more word predictions positioned based, at least in part, on the one or more subsequent candidate input characters.

In another example embodiment, an electronic device is provided. The electronic device comprises a display, configured to display characters, a memory storing one or more instructions, and a processor. The processor is configured to execute the one or more instructions to perform: displaying, on the display, a first virtual keyboard including a set of keys, wherein each key of the set of keys is associated with one or more characters, receiving an input reflecting selection of one or more keys of the set of keys, determining, based on the selection, one or more subsequent candidate input characters and one or more word predictions corresponding to the one or more subsequent candidate input characters, displaying, on the display, a second virtual keyboard including a second set of keys, wherein the second set of keys comprises one or more keys associated with the one or more word predictions positioned based, at least in part, on the one or more subsequent candidate input characters.

These example embodiments, in addition to those described below, permit, for example, the user of an electronic device to input a set of characters without diverting attention and visual focus from the keyboard. Predicting and providing various word options that the user is likely contemplating, and doing so at locations on the keyboard that leverage the user's familiarity with the keyboard layout, allows the user's focus to remain on the keyboard, enhancing efficiency, accuracy, and speed of character input. In addition, providing the user with word predictions on the keyboard, rather than outside of the keyboard, is an efficient use of the limited physical space available on an electronic device.

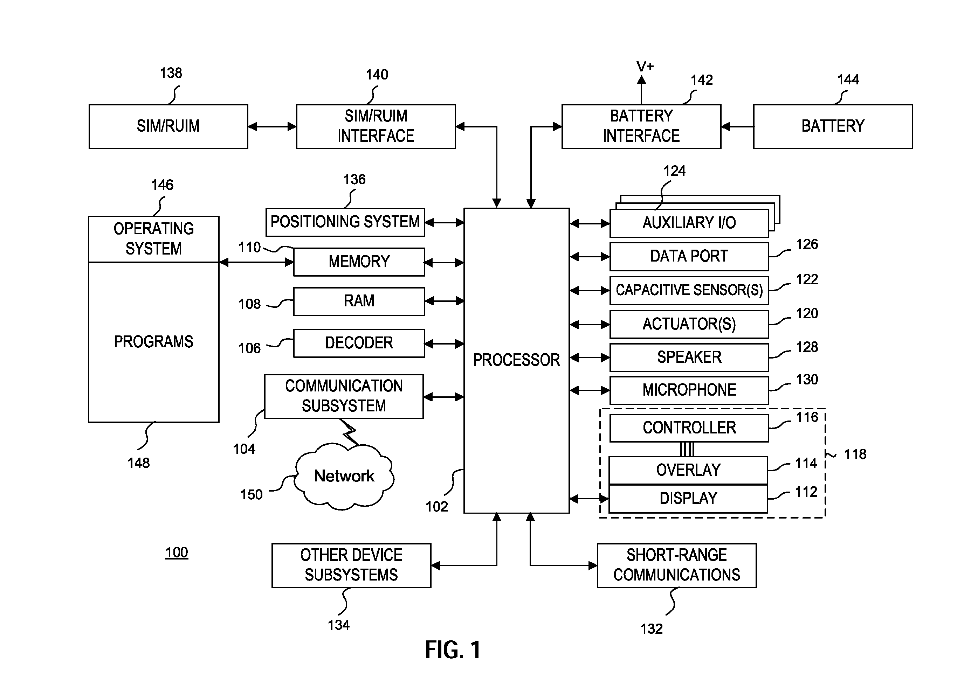

**Figure 1** is an example block diagram of an electronic device 100, consistent with example embodiments disclosed herein. Electronic device 100 includes multiple components, such as a processor 102 that controls the overall operation of electronic device 100. Communication functions, including data and voice communications, are performed through a communication subsystem 104. Data received by electronic device 100 is decompressed and decrypted by a decoder 106. The communication subsystem 104 receives messages from and sends messages to a network 150. Network 150 can be any type of network, including, but not limited to, a wired network, a data wireless network, voice wireless network, and dual-mode wireless networks that support both voice and data communications over the same physical base stations. Electronic device 100 can be a battery-powered device and include a battery interface 142 for receiving one or more batteries 144.

Processor 102 is coupled to and can interact with additional subsystems such as a Random Access Memory (RAM) 108; a memory 110, such as a hard drive, CD, DVD, flash memory, or a similar storage device; one or more displays 112; one or more actuators 120; one or more capacitive sensors 122; an auxiliary input/output (I/O) subsystem 124; a data port 126; one or more speakers 128; one or more microphones 130; short-range communications 132; and other device subsystems 134; and a touchscreen 118.

Touchscreen 118 includes a display 112 with a touch-active overlay 114 connected to a controller 116. User-interaction with a graphical user interface (GUI), such as a virtual keyboard rendered on the display 112 as a GUI for input of characters, or a web-browser, is performed through touch-active overlay 114. Processor 102 interacts with touch-active overlay 114 via controller 116. Characters, such as text, symbols, images, and other items are displayed on display 112 of touchscreen 118 via processor 102. Characters can be input into the electronic device 100 using a keyboard (not pictured in **Figure 1****),** such as a physical keyboard having keys that are mechanically actuated, or a virtual keyboard having keys rendered on display 112. The keyboard includes a set of rows, and each row further including a plurality of keys, each key associated with one or more characters of a plurality of characters. The keyboard also includes a plurality of touch-sensitive sensors, such as capacitive, resistive, and pressure sensors, configured to detect gestures (such as swiping motions) along the keys of the keyboard. In some example embodiments, the sensors are individually associated with each key. In some other example embodiments, a single touch-sensitive sensor is associated with one or more columns of keys. In other example embodiments, such as in the case of a virtual keyboard being used, the sensors are integrated in the display. In some other example embodiments, the sensors can be configured to detect swiping motions in one or more directions (e.g., vertical, horizontal, diagonal, or any combination thereof). In addition, a swiping motion can include a movement along one or more keys of the keyboard, such as in a particular sequence of keys or in accordance with a key selection mechanism.

Touchscreen 118 is connected to and controlled by processor 102. Accordingly, detection of a touch event and/or determining the location of the touch event can be performed by processor 102 of electronic device 100. A touch event includes in some embodiments, a tap by a finger, a swipe by a finger, a swipe by a stylus, a long press by finger or stylus, or a press by a finger for a predetermined period of time, and the like.

While specific embodiments of a touchscreen have been described, any suitable type of touchscreen for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the electronic device and its particular application and demands.

Processor 102 can also interact with a positioning system 136 for determining the location of electronic device 100. The location can be determined in any number of ways, such as by a computer, by a Global Positioning System (GPS) (which can be included in electronic device 100), through a Wi-Fi network, or by having a location entered manually. The location can also be determined based on calendar entries.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information can be programmed into memory 110.

Electronic device 100 also includes an operating system 146 and programs 148 that are executed by processor 102 and are typically stored in memory 110 or RAM 108. Additional applications can be loaded onto electronic device 100 through network 150, auxiliary I/O subsystem 124, data port 126, short-range communications subsystem 132, or any other suitable subsystem.

A received signal such as a text message, an e-mail message, or a web page download is processed by communication subsystem 104. This processed information is then provided to processor 102. Processor 102 processes the received signal for output to display 112, to auxiliary I/O subsystem 124, or a combination of both. A user can compose data items, for example e-mail messages, which can be transmitted over network 150 through communication subsystem 104. For voice communications, the overall operation of electronic device 100 is similar. Speaker 128 outputs audible information converted from electrical signals, and microphone 130 converts audible information into electrical signals for processing.

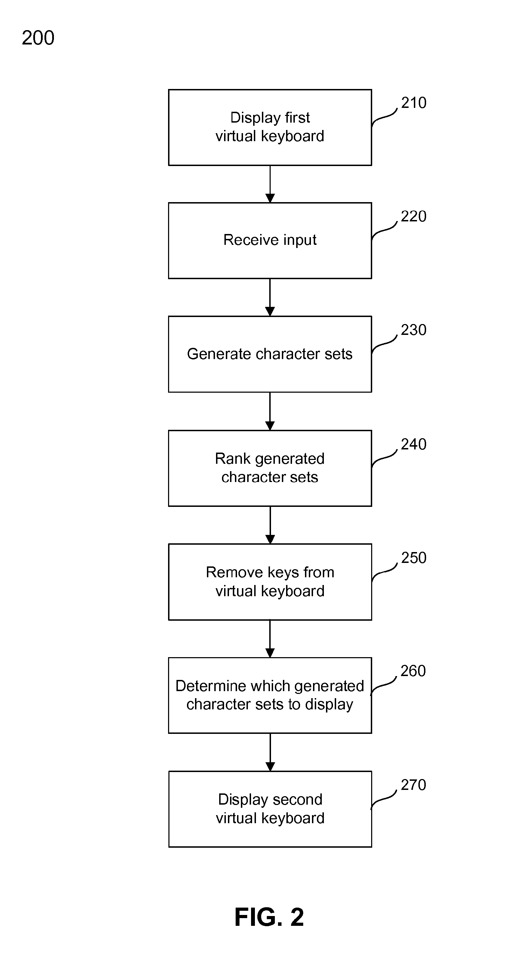

**Figure 2** is an example flowchart illustrating an example method for generating and displaying a set of characters on a virtual keyboard, consistent with example embodiments disclosed herein. Memory (such as memory 110 or RAM 108) can include a set of instructions-such as a predictive algorithm, program, software, or firmware-that, when executed by a processor (such as processor 102), can be used to disambiguate an input (such as text). For example, when a processor 102 executes such predictive software, received input can be disambiguated and various options can be provided, such as a set of characters (e.g., words, phrases, acronyms, names, slang, colloquialisms, abbreviations, or any combination thereof) that a user might be contemplating. A processor 102 can also execute predictive software given unambiguous text input, and predict a set of characters potentially contemplated by the user based on several factors, including context and frequency of use, as well as other factors, as appreciated by those skilled in the art.

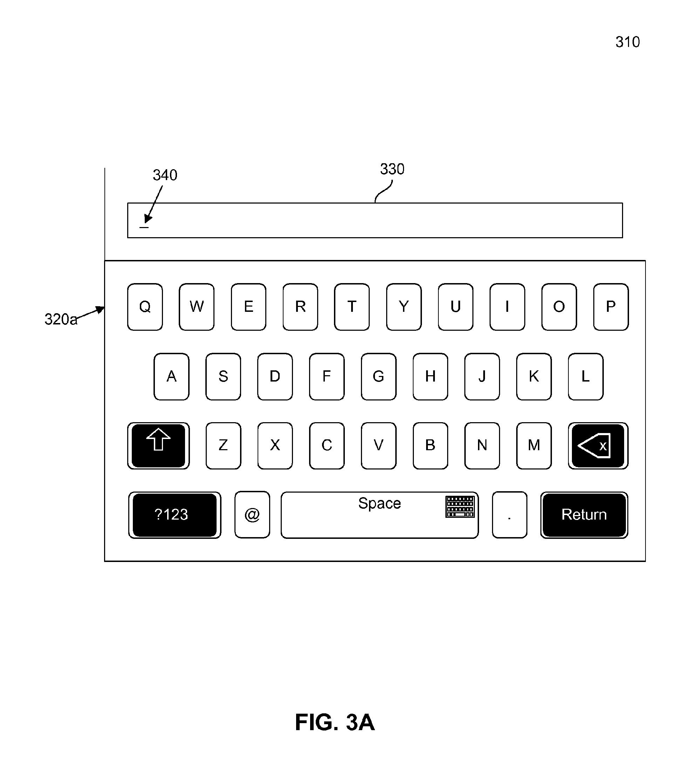

Referring back to **Figure 2****,** method 200 begins at step 210, where the processor 102 displays a first virtual keyboard on the display (such as display 112). The first virtual keyboard can include a set of keys, wherein each of the set of keys is associated with one or more characters. The keys can be arranged, for example, into one or more rows, one or more columns, or any combination thereof. The choice of keyboard arrangement is not critical to any embodiment. At step 220, the processor 102 receives an input of one or more keys from a first virtual keyboard. For example, the processor 102 can receive an input that reflects the selection of one or more keys of the first virtual keyboard. As used herein, a character can be any character, such as a letter, a number, a symbol, a punctuation mark, and the like. One or more inputted characters can be displayed in an input field (for example, input field 330 further described below in connection with **Figures 3A-3C****,** **Figures 4A-4B****,** and **Figures 5A-5B**) that displays the character input received from the first virtual keyboard.

At step 230, the processor 102 generates one or more sets of characters such as, for example, words, acronyms, names, locations, slang, colloquialisms, abbreviations, phrases, or any combination thereof. The processor 102 generates the one or more sets of characters based on the input received at step 220. The generated sets of characters can also be referred to as "word predictions," "prediction candidates," "candidate sets of characters," "candidate words," or by other names. Possible generated sets of characters include, for example, a set of characters stored in a memory of the electronic device 100 (e.g., a name stored in a contact list, or a word stored in a dictionary), a set of characters stored in a memory of a remote device (e.g., a server), a set of characters previously input by the user, a set of characters based on a hierarchy or tree structure, or a combination thereof, or any set of characters selected by a processor 102 based on a defined arrangement. In some embodiments, the processor 102 generates a set of subsequent candidate input characters based on the input received at step 220. Subsequent candidate input characters can refer to the next character to be input, or the next character included in a word prediction. The processor 102 can generate the set of subsequent candidate input characters by, for instance, generating permutations of the received input with various characters and determining whether each permutation is found or likely to be found in a reference database. The reference database can refer to a database (or, more generally, a collection of character sets) associated with generating and ranking sets of characters, such as a contact list, dictionary, or search engine. As an example, if the received input is "a," generated permutations can include "aa," "ab," "ac," "al," and so forth. If the reference database in this example includes a contact list and dictionary, the processor 102 can determine that the permutations "aa" and "al" are not found or unlikely to be found in the database, whereas "ab" and "ac" can correspond to character sets found in the database (such as "about," "Abigail," and "accent").

In some embodiments, the processor 102 uses contextual data for generating a set of characters. Contextual data considers the context of characters in the input field. Contextual data can include information about, for example, sets of characters previously input by the user, grammatical attributes of the characters inputted in the input field (such as whether a noun or a verb is the next likely set of characters in a sentence), or any combination thereof. For example, if the set of characters "the" is present in the input field, the processor 102 can use contextual data to determine that a noun-rather than a verb-is more likely to be the next set of characters following "the." Similarly, if the set of characters "please give me a" has been input, the processor 102 can determine that the following set of characters is likely to be "call" based on the context (e.g., the frequency of different sets of characters that follow "please give me a"). The processor 102 can also use context data to determine whether an input character is incorrect. For example, the processor 102 can determine that the input character was intended to be a "w" rather than an "a," given the likelihood that the user selected an errant neighboring key.

In some example embodiments, the set of characters generated at step 230 can begin with the same character received as input at step 220. For example, if the characters "ca" have been received as input using the virtual keyboard, the set of characters generated at step 230 would likely begin with "ca," such as "can" or "call." The generated set of characters is not limited to any particular length, although length may influence the set of characters generated by the processor 102.

In some example embodiments, the set of characters generated at step 230 are not limited to those that begin with the same characters received as input at step 220. For example, if the received input is an "x," the processor 102 may generate sets of characters such as "exact" or "maximum." Such sets of characters can be generated using contextual data.

Next, at step 240, the processor 102 ranks or scores the sets of characters generated at step 230. These rankings or scores (collectively referred to as rankings) can influence the determination of which characters to remove from the virtual keyboard at step 250 and which of the generated character sets to display at step 260. The rankings can further reflect the likelihood that a particular candidate set of characters might have been intended by the user, or might be chosen by a user relative to other candidate sets of characters. The processor 102 can determine, for example, which candidate set (or sets) of characters has the highest probability of being the next received input. In some embodiments, contextual data can influence the rankings generated at step 240. For example, if the processor 102 has determined that the next set of characters input using the keyboard is likely to be a particular word based on past frequency of use, the processor 102 can assign a higher ranking to the word relative to other generated sets of characters. In some embodiments, the processor 102 can be configured to rank nouns or adjectives higher based on the previously input set of characters. If the previously input set of characters is suggestive of a noun or adjective, the processor 102, using such contextual data, can, at step 240, rank the nouns or adjectives corresponding to what the user is typing more highly.

In some embodiments, rankings can also be assigned to the set of subsequent candidate input characters generated at step 230, separate from (and/or, in addition to) the rankings assigned to the generated word predictions. For instance, the processor 102 can determine, for each of the generated subsequent candidate input characters, the relative likelihood that a word prediction corresponding to the subsequent candidate input character will be selected by a user. To illustrate, if the character "i" has been input, and if one of the generated subsequent candidate input characters is "n," corresponding word predictions can include "inside," "intelligence," and "internal." Similarly, in assigning rankings to the set of subsequent candidate input characters, the processor 102 can consider the quantity, length, or another feature of the word predictions corresponding to a particular generated subsequent candidate input character. For example, a subsequent candidate input character that has five relatively short corresponding word predictions can be assigned a higher ranking than a subsequent candidate input character that has two relatively long corresponding word predictions. Thus, the set of subsequent candidate input characters can be ranked based on both the likelihood that a word prediction corresponding to the subsequent candidate input character will be selected, and other factors associated with the corresponding word predictions such as quantity and length.

In some embodiments, contextual data can include information about which programs or applications are currently running or in use by a user. For example, if the user is running an e-mail application, sets of characters associated with that user's e-mail system (such as sets of characters from the user's contact list or address book) can be used to determine the ranking. As an example, the processor 102 can assign higher rankings to proper nouns found in the user's contact list (e.g., names such as "Benjamin" and "Christine") relative to, for example, pronouns (e.g., "her" and "him"). Such an assignment might be based on the fact that the user frequently inputs names into messages and emails. N-grams, including unigrams, bigrams, trigrams, and the like, can also be considered in the ranking of the sets of characters. Alternatively, in some embodiments, the geolocation of the electronic device 100 or user can be used during the ranking process. If, for example, the electronic device 100 recognizes that a user is located at their office, then sets of characters generally associated with work can be ranked higher. Conversely, for example, if the electronic device 100 determines that a user is away from the office (e.g., at an amusement park or shopping mall), then the processor 102 can assign higher rankings to sets of characters generally associated with leisure activities.

At step 250, the processor 102 determines which keys to remove from the virtual keyboard. Each key of the virtual keyboard can be associated with a character or set of characters. In some embodiments, the processor 102 determines which keys to remove based on the word predictions and/or subsequent candidate input characters generated and ranked at steps 230 and 240, as described above. For instance, keys of the virtual keyboard not associated with any of the subsequent candidate input characters included in the generated sets of characters can be removed. Similarly, keys associated with subsequent candidate input characters ranked below a threshold or not otherwise highly ranked can be removed. Removing these keys provides space to display on the virtual keyboard the word predictions, or a subset of the word predictions, generated and ranked at steps 230 and 240.

At step 260, the processor 102 determines which of the word predictions corresponding to the remaining subsequent candidate input characters to display. In some embodiments, the processor 102 can consider the rankings generated at step 240 in determining which of the word predictions to display. The processor 102 can determine, for example, to display a predetermined number of word predictions with the highest rankings assigned at step 240. The determination of how many, and which, word predictions to display can be based on, for example, the estimated likelihood that a given word prediction will be selected as the next input and the length of a given word prediction. As one example, the processor 102 can determine that, where a particular word prediction has a very high likelihood of being selected as the next input, it can reduce the number of word predictions to display.

In some embodiments, the processor 102 can consider both the rankings of the generated word predictions and the rankings of the generated subsequent candidate input characters to determine which word predictions to display. For example, the processor 102 can consider, for each of the subsequent candidate input characters remaining on the virtual keyboard, the relative ranking of the subsequent candidate input character in determining which, and how many, of the corresponding word predictions to display. The processor 102 can determine, for example, to display fewer word predictions corresponding to a subsequent candidate input character ranked relatively lower than the other remaining subsequent candidate input characters.

At step 270, the processor 102 displays a second virtual keyboard. In some embodiments, the processor 102 changes a first virtual keyboard into a second virtual keyboard. Each of the keys of the second virtual keyboard can be associated with either a subsequent candidate input character or a word prediction. For example, as discussed above in steps 250 and 260, keys of the virtual keyboard not associated with a subsequent candidate input character can be removed and word predictions associated with a subsequent candidate input character can be selected for display on the virtual keyboard. In some embodiments, the position and properties, such as width and font size, of keys associated with a subsequent candidate input character do not change from the first virtual keyboard to the second virtual keyboard. In additional example embodiments, each of the word predictions can be displayed at a location on the virtual keyboard in the proximity of the corresponding subsequent candidate input character. Furthermore, and as will be further described below, animations can be used to visually lead the user to one or more word predictions displayed on the second virtual keyboard.

**Figures 3A-3C**, **4A-B**, and **5A-5B** illustrate a series of example front views of an electronic device 310, consistent with embodiments disclosed herein. In some embodiments, electronic device 310 is configured in the same or substantially the same manner as electronic device 100 described above. In some embodiments, electronic device 310 includes a virtual keyboard 320a rendered on a display. As illustrated in **Figure 3A****,** the virtual keyboard may include, for example, sets of rows, with each row further including a plurality of keys, and each key associated with one or more characters of a plurality of characters. The virtual keyboard 320a may be configured, for example, to detect the location and possibly pressure of one or more objects at the same time. In some embodiments, virtual keyboard 320a is a standard QWERTY keyboard, such as the keyboard depicted in **Figure 3A****.** In other embodiments, virtual keyboard 320a has a different key configuration, such as AZERTY, QWERTZ, or a reduced keyboard layout such as a reduced keyboard based on the International Telecommunication Union (ITU) standard (ITU E.161) having "ABC" on key 2, "DEF" on key 3, and so on. Virtual keyboard 320a, as well as the keys included on the keyboard, can take on any shape (e.g., square, rounded, oval-shape), and the keys can be of variable size. Electronic device 310 may also include an input field 330 rendered on the display, which may display some or all of the characters input by the user using virtual keyboard 320a. Input field 330 may further include cursor 340, which can be an underscore (as shown in **Figure 3A****)** or any other shape, such as a vertical line. Cursor 340 represents a space where a subsequent character input, selected character, or selected set of characters can be displayed.

The examples and embodiments illustrated in **Figures 3A-3C****, 4A-B**, and **5A-5B** can be implemented with any set of characters, such as words, acronyms, names, locations, slang, colloquialisms, abbreviations, phrases, or any combination thereof.

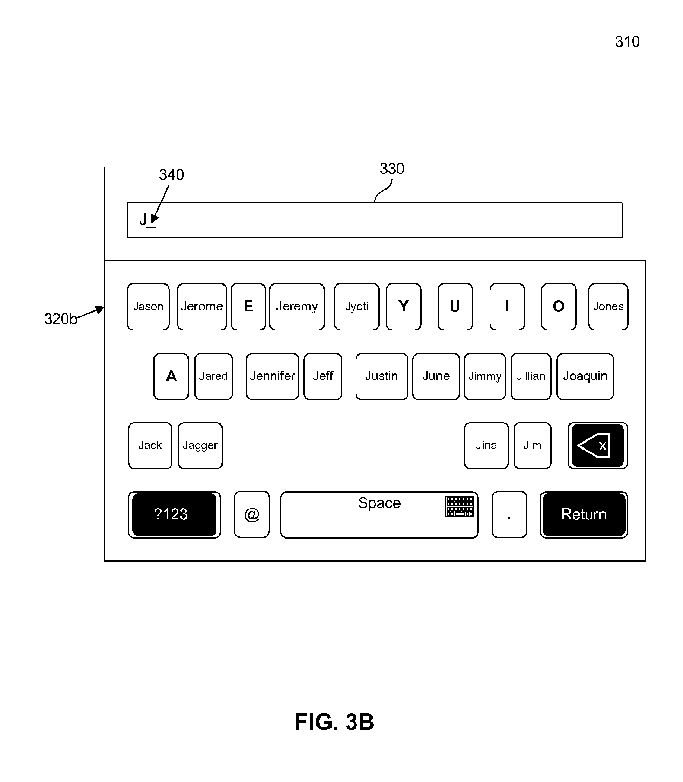

As shown in **Figure 3B**, a character input using the virtual keyboard 320a depicted in **Figure 3A** can be displayed in input field 330. Cursor 340 moves to the character space that indicates the location of where the next character input can be displayed. Following input of a character (e.g., as shown in **Figure 3B****,** the character "J" displayed in input field 330), a processor included in electronic device 310 (such as processor 102) can, as described above in connection with **Figure 2****,** generate one or more sets of characters, including word predictions and subsequent candidate input characters. As further described above in connection with steps 240, 250, and 260 of **Figure 2****,** the processor 102 can rank the generated sets of characters, remove keys from the virtual keyboard, and determine which of the generated sets of characters to display. Furthermore, the processor 102 can change virtual keyboard 320a into virtual keyboard 320b which, as illustrated in **Figure 3B****,** is different from virtual keyboard 320a in that keys not associated with subsequent candidate input characters have been removed, and some of the removed keys replaced with word predictions corresponding to the subsequent candidate input characters. For instance, the virtual keyboard 320b includes six keys associated with the subsequent candidate input characters "A," "E," "Y," "U," "I," and "O." This can indicate, for example, that the other keys included in virtual keyboard 320a not included in virtual keyboard 320b were not associated with any of the subsequent candidate input characters included in the generated word predictions. Similarly, this can indicate that, although the removed keys are associated with one or more subsequent candidate input characters corresponding to generated word predictions, these subsequent candidate input characters (and the corresponding word predictions) were not selected for display on the virtual keyboard 320b (for example, for the reasons discussed above in connection with **Figure 2****)**. In some embodiments, the keys associated with the subsequent candidate input characters can be emphasized by, for example, bolding the key, or rendering the key in a different color, size, and/or font.

**Figure 3B** further illustrates that the word predictions selected for display are displayed at a location in proximity to the corresponding subsequent candidate input character. In the example shown in **Figure 3B**, word predictions associated with names are displayed on the virtual keyboard 320b. The word predictions may have been generated, for example, based on names stored in the user's contact list or address book. The words "Jason," "Jared," "Jagger," and "Jack," are each displayed above, below, or adjacent to the character "A," which is the corresponding subsequent candidate input character. Similarly, the words "Jimmy" and "Jillian" are displayed one row below the corresponding subsequent candidate input character "I," and the words "Jina" and "Jim," are displayed two rows below the character "I." As an additional example, the word "Justin" is displayed below and to the left of its corresponding subsequent candidate input character "U," whereas the word "Jeff' is displayed below and to the right of its corresponding subsequent candidate input character "E." Thus, as the foregoing examples illustrate, word predictions selected for display can be displayed in various configurations relative to the corresponding subsequent candidate input character. In some embodiments, word predictions can be displayed in such a way so as to enable the user to quickly and intuitively select a given word prediction by visually relating the word to its corresponding subsequent candidate input character.

In some embodiments, word predictions can be displayed based on the relative likelihood that a given word prediction will be selected by the user. For example, for a given subsequent candidate input character, corresponding word predictions with a relatively high likelihood of user selection can be displayed closer to the subsequent candidate input character (e.g., the word "Jeremy" displayed in virtual keyboard 320b) than those word predictions with a relatively low likelihood of user selection (e.g., the word "Jeff'). Similarly, words with a relatively high likelihood of user selection can be displayed in the same row as the corresponding subsequent candidate input character (e.g., the word "Jones" displayed in virtual keyboard 320b), whereas words with a relatively low likelihood of user selection can be displayed in a different row (e.g., the word "Joaquin").

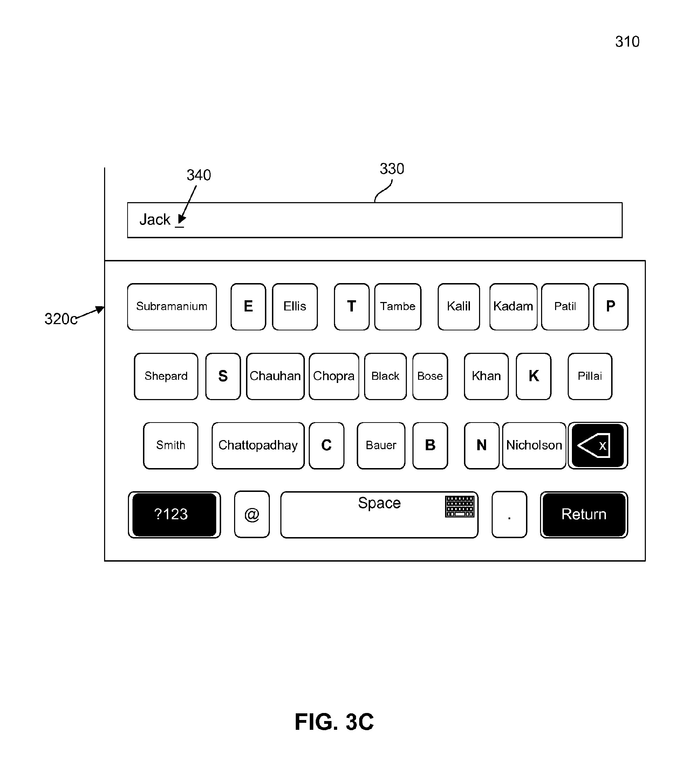

Moving on to the example shown in **Figure 3C****,** the user has selected the word "Jack," which has been displayed in input field 330. Following the user selection, processor 102 generated and ranked new sets of subsequent candidate input characters and word predictions, removed keys from virtual keyboard 320b (e.g., the character "A" has been removed), selected word predictions and additional subsequent candidate input characters for display (e.g., the character "S" has been selected for display), and then changed the virtual keyboard 320b into the virtual keyboard 320c depicted in **Figure 3C****.** In some embodiments, no keys associated with subsequent candidate input characters are removed or added from virtual keyboard 320b before transitioning to 320c. This may be the case, for example, when the set of subsequent candidate input characters for display is the same both before and after receiving user selection of a word prediction. In additional example embodiments, the processor 102 can cause the virtual keyboard to revert back to a default or standard keyboard (e.g., the QWERTY keyboard, or the virtual keyboard 320a depicted in **Figure 3A****)** following user selection of a word prediction.

Turning back to the example shown in **Figure 3C****,** the processor has generated word predictions associated with the user-selected name "Jack." These words may have been generated, for example, based on last names stored in the user's contact list or address that are also associated with the first name "Jack." Similarly, the words may have been generated by referring to a broader database of names, such as a corporate directory, an online directory, an electronic telephone book, or the like. As discussed above in connection with **Figure 3B****,** the word predictions can be displayed on the virtual keyboard 320c according to various configurations.

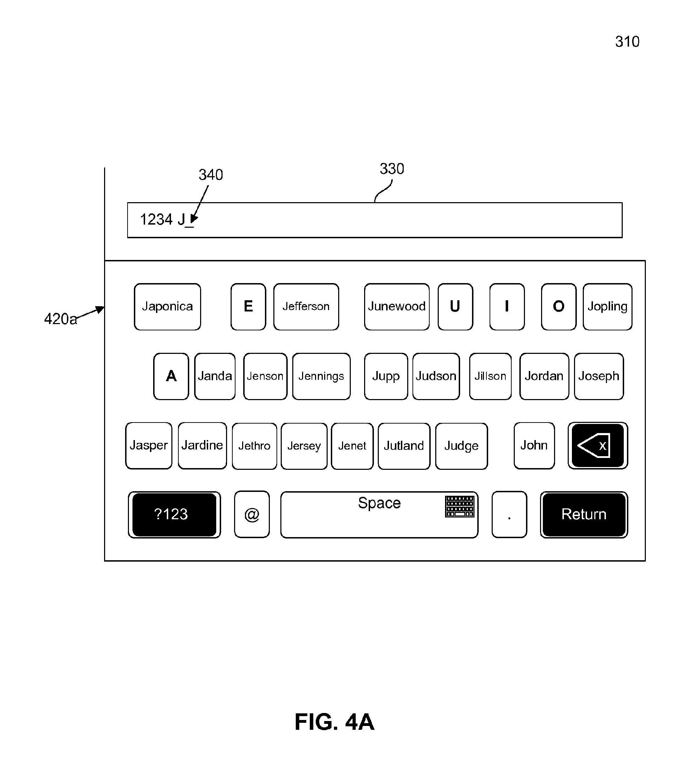

**Figure 4A** shows an example of a virtual keyboard 420a rendered on electronic device 310 where the characters "1234 J" are displayed in the input field 330. The processor 102 has generated word predictions corresponding to the subsequent candidate input characters "A," "E," "U," "I," and "O," which are shown as bolded in the virtual keyboard 420a. In this example, word predictions associated with names and locations have been generated, based on, for example, one or more databases such as an address book, an online mapping or navigation service, and the like. In addition, for each subsequent candidate input character, the number of word predictions displayed differs. Specifically, four, six, five, one, and four word predictions corresponding to the subsequent candidate input characters "A," "E," "U," "I," and "O," are displayed, respectively. As discussed above, the number of word predictions corresponding to a given subsequent candidate input character can vary based on different factors, including, for example, the selection probability associated with a given word prediction, the length of each word prediction, and contextual information such as grammatical attributes.

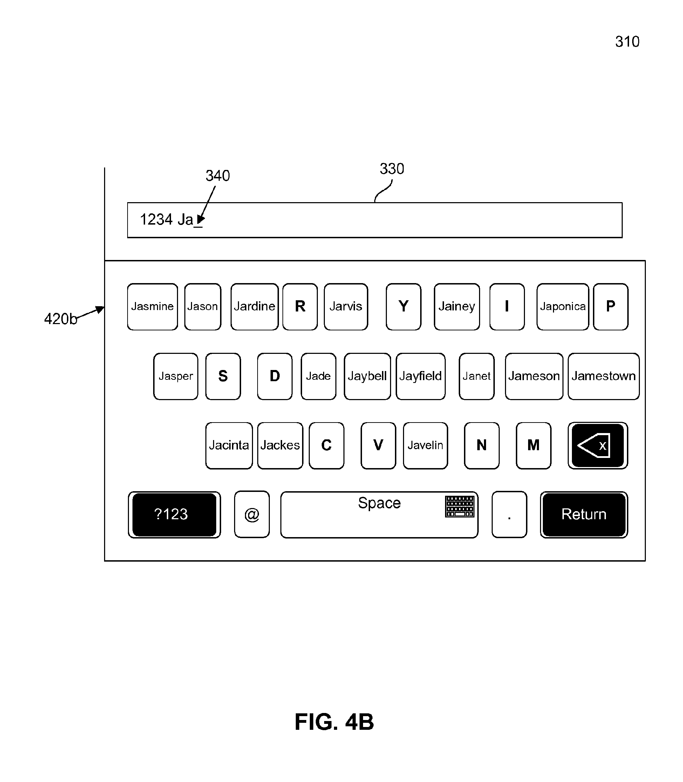

Continuing on with this example in **Figure 4B****,** the user has opted not to select one of the displayed word predictions, but instead selected the character "A" for input. As a result, the input field 330 shown in **Figure 4B** now contains the characters "1234 Ja." Furthermore, processor 102 has changed virtual keyboard 420a to virtual keyboard 420b; in contrast to virtual keyboard 420a, virtual keyboard 420b includes ten subsequent candidate input characters ("S," "D," "C," "R," "V," "Y," "N," "I," "M," and "P"), with each of the corresponding word predictions beginning with the characters "Ja." In some embodiments, if the user again does not select one of the displayed word predictions, virtual keyboard 420b will revert to a standard or default keyboard, such as a QWERTY keyboard or keyboard 320a shown in **Figure 3A****.**

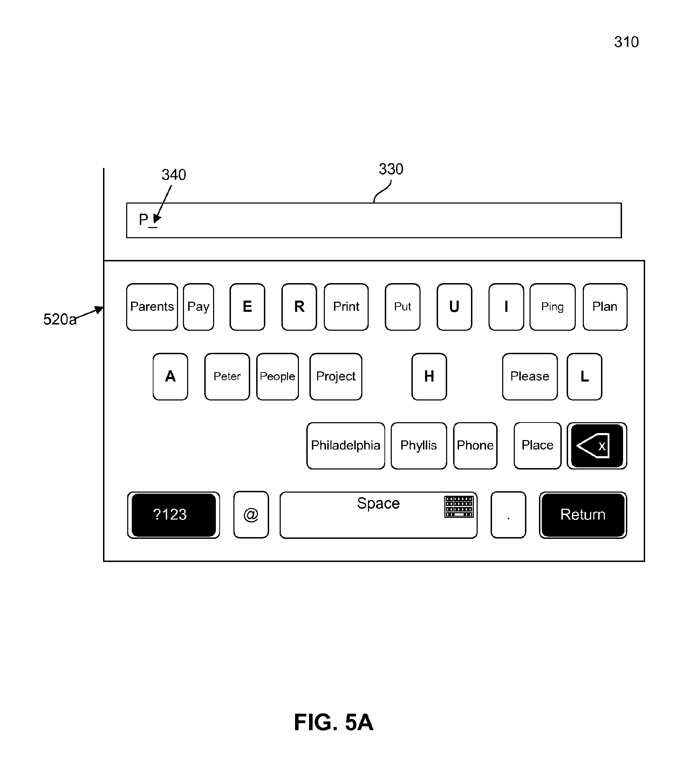

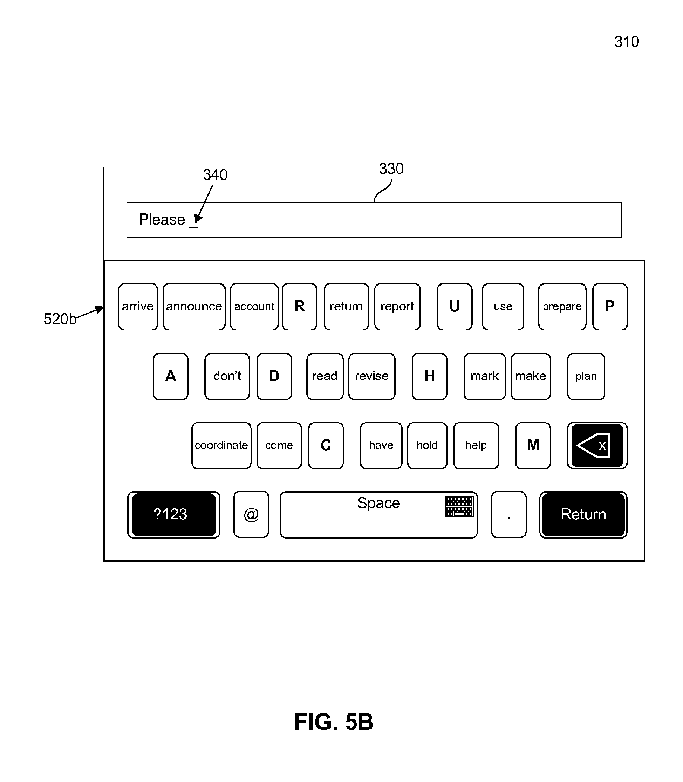

**Figure 5A** shows an example of a virtual keyboard 520a rendered on electronic device 310 where the character "P" is displayed in the input field 330. Similar to the examples shown in **Figures 3B-3C** and **Figures 4A-4B****,** above, the processor 102 has generated word predictions corresponding to the subsequent candidate input characters "A," "E," "R," "H," "U," "I," and "L." In the example shown in **Figure 5A****,** the word predictions are associated with names (e.g., "Peter," "Phyllis"), locations (e.g., "Philadelphia"), nouns (e.g., "project," "phone") as well as verbs (e.g., "put," "print"). These word predictions may have been generated, based on, for example, a plurality of databases including a contact list, an electronic dictionary, a corporate directory, an online mapping or navigation service, and the like. Continuing on with this example in **Figure 5B****,** the user has selected the word prediction "Please," which appears in input field 330. Based on the selection, the processor 102 has changed virtual keyboard 520a to virtual keyboard 520b which, as illustrated in **Figure 5B****,** includes a different set of subsequent candidate input characters and word predictions.

In addition to the example embodiments discussed above in connection with **Figures 3B-3C****,** **Figures 4A-4B****,** and **Figures 5A-5B****,** animations can be used to show the association between subsequent candidate input characters and the corresponding word predictions. Animations can be used, for example, to visually lead the user to key regions of the text input area, such as regions containing word predictions corresponding to one or more subsequent candidate input characters. In some embodiments, the animations may be brief in duration, such as 500 milliseconds or less.

In addition to the example embodiments discussed above in connection with **Figures 3B-3C****,** **Figures 4A-4B****,** and **Figures 5A-5B****,** the virtual keyboard may revert back to a default or standard keyboard (e.g., the QWERTY keyboard, or the virtual keyboard 320a depicted in **Figure 3A****)** when one or more conditions are met. For example, processor 102 may change the virtual keyboard back to virtual keyboard 320a (or another standard keyboard) if the user decides not to select one of the displayed word predictions a given number of times (e.g., two times). Similarly, the virtual keyboard may revert back to virtual keyboard 320a if processor 102 detects: (1) a swiping motion outside of the virtual keyboard, (2) a swiping motion in a particular region on the display 112 of electronic device 310, (3) a multi-touch motion on the display 112 of electronic device 310, or (4) selection of a key associated with a function for reverting back to virtual keyboard 320a. In some embodiments, the virtual keyboard may revert back to virtual keyboard 320a after a predetermined time period, such as a time period in the range of 1 to 4 seconds. In additional example embodiments, other forms of input such as voice input, or detection of a shaking or tilting of the electronic device 310 (by, for example, triggering an accelerometer included in the electronic device), can be used to revert back to virtual keyboard 320a.

In addition to the example embodiments discussed above in connection with **Figures 3B-3C****,** **Figures 4A-4B****,** and **Figures 5A-5B****,** the virtual keyboard may be displayed according to various configurations. In some embodiments, one or more keys of the virtual keyboard are displayed in a form that enhances the visibility of the keys. For example, the keys of the virtual keyboard may vary in width (e.g., longer word predictions may require wider keys), emphasis (e.g., certain keys may be bolded, italicized, or displayed in a different color), and font size (e.g., keys associated with a subsequent candidate character may have a larger font size than those associated with a word prediction). A subsequent candidate input character and the corresponding word predictions can be displayed in a color different from the neighboring keys on the virtual keyboard. Furthermore, in some embodiments, the keys of the virtual keyboard do not overlap with one another. Similarly, the virtual keyboard may have unused space, for example, resulting from the removal of keys. In additional example embodiments, the spacing between the keys of the virtual keyboard may vary.

Other embodiments of the invention will be apparent to those skilled in the art from consideration of the specification and practice of the invention disclosed herein. It is intended that the specification and examples be considered as examples only, with a true scope and spirit of the invention being indicated by the following claims.

## Claims

1. A method for an electronic device (100) having a display (112), the method comprising:
displaying, on the display, a first virtual keyboard including a set of keys, wherein each key of the set of keys is associated with one or more characters;
receiving an input reflecting selection of one or more keys of the set of keys;
determining, based on the selection, one or more subsequent candidate input characters and one or more word predictions corresponding to the one or more subsequent candidate input characters;
displaying, on the display, a second virtual keyboard including a second set of keys, wherein the second set of keys comprises one or more keys associated with the one or more word predictions positioned based, at least in part, on the one or more subsequent candidate input characters.

2. The method of claim 1, further comprising:
displaying, on the display, the first virtual keyboard when a precondition is met.

3. The method of claim 2, wherein the precondition comprises one of:
receiving an input reflecting selection of a specific key of the second virtual keyboard;
receiving an input reflecting selection of a key associated with a word prediction;
detecting a swipe input across the second virtual keyboard;
detecting a swipe input outside of the second virtual keyboard; or
determining that a predetermined time period has elapsed without receiving an input.

4. The method of claim 3, wherein the predetermined time period is in the range of 1 to 4 seconds.

5. The method of any preceding claim , wherein, for each key of the second virtual keyboard that is associated with a word prediction, the width of the key is determined based on the length of the word prediction.

6. The method of any preceding claim, wherein the keys of the second virtual keyboard do not overlap with one another.

7. The method of any preceding claim,, wherein at least one of the keys of the second virtual keyboard are associated with one or more of the subsequent candidate input characters.

8. The method of any preceding claim, wherein at least one of the keys of the second virtual keyboard associated with one or more of the word predictions is positioned in the proximity of one or more subsequent candidate input characters corresponding to the one or more word predictions.

9. The method of any preceding claim, wherein at least one of the keys of the second virtual keyboard is displayed in a form that enhances the visibility of the keys.

10. The method of any preceding claim, wherein at least one of the one or more word predictions is associated with the highest probability of being the next received input.

11. An electronic device (100) comprising:
a display (112), configured to display characters;
a memory (110) storing one or more instructions; and
a processor (102) configured to execute the one or more instructions to perform the method steps of any preceding claim.

## Amended claims

### Amended claims in accordance with Rule 137(2) EPC.

**1.** A method for an electronic device (100) having a display (112), the method comprising:
displaying (210), on the display, a first virtual keyboard (320a) including a set
of keys, wherein each key of the set of keys is associated with one or more characters;
receiving (220) an input reflecting selection of one or more keys of the set of
keys;
determining (230, 240), based on the selection, one or more subsequent
candidate input characters and one or more word predictions corresponding to the one or more subsequent candidate input characters;
preparing (250, 260) a second set of keys including replacing within said first
set of keys, at least some keys not associated with subsequent candidate input characters with keys corresponding to word predictions associated with the subsequent candidate input characters;
displaying (270), on the display, a second virtual keyboard including the
second set of keys, wherein the one or more keys associated with the one or more word predictions are positioned based, at least in part, on the one or more subsequent candidate input characters.

**2.** The method of claim 1, further comprising:
displaying, on the display, the first virtual keyboard when a precondition is
met.

**3.** The method of claim 2, wherein the precondition comprises one of:
receiving an input reflecting selection of a specific key of the second virtual
keyboard;
receiving an input reflecting selection of a key associated with a word
prediction;
detecting a swipe input across the second virtual keyboard;
detecting a swipe input outside of the second virtual keyboard; or
determining that a predetermined time period has elapsed without receiving an
input.

**4.** The method of claim 3, wherein the predetermined time period is in the range of 1 to 4 seconds.

**5.** The method of any preceding claim, wherein, for each key of the second virtual keyboard that is associated with a word prediction, the width of the key is determined based on the length of the word prediction.

**6.** The method of any preceding claim, wherein the keys of the second virtual keyboard do not overlap with one another.

**7.** The method of any preceding claim, wherein at least one of the keys of the second virtual keyboard associated with one or more of the subsequent candidate input characters is displayed in the same position as in the first virtual keyboard.

**8.** The method of any preceding claim, wherein at least one of the keys of the second virtual keyboard associated with one or more of the word predictions is positioned in the proximity of one or more subsequent candidate input characters corresponding to the one or more word predictions.

**9.** The method of any preceding claim, wherein at least one of the keys of the second virtual keyboard is displayed in a form that enhances the visibility of the keys.

**10.** The method of any preceding claim, wherein at least one of the one or more word predictions is associated with the highest probability of being the next received input.

**11.** An electronic device (100) comprising:
a display (112), configured to display characters;
a memory (110) storing one or more instructions; and
a processor (102) configured to execute the one or more instructions to
perform the method steps of any preceding claim.
